# EUROPÄISCHE PATENTSCHRIFT

(11) **EP 3 127 729 B1**
(45) Veröffentlichungstag und Bekanntmachung des Hinweises auf die Patenterteilung: **20.05.2020**
(21) Anmeldenummer: 16001520.2
(22) Anmeldetag: 08.07.2016
(51) Int. Cl.: B60H 1/00

(54) **VERFAHREN ZUR STEUERUNG EINER FAHRGASTRAUM-KLIMATISIERUNG EINES HYBRID-NUTZFAHRZEUGS**
METHOD FOR CONTROLLING A PASSENGER SPACE AIR CONDITIONING OF A HYBRID COMMERCIAL VEHICLE
PROCEDE DE COMMANDE D'UNE CLIMATISATION D'HABITACLE D'UN VEHICULE UTILITAIRE HYBRIDE

(30) Priorität: 17.07.2015 DE 102015009316
(43) Veröffentlichungstag der Anmeldung: 08.02.2017
(73) Patentinhaber: MAN Truck & Bus SE, 80995 München (DE)
(72) Erfinder: Fissmann, Tobias, 80939 München (DE); Mayer, Florian, 83064 Raubling (DE)
(74) Vertreter: Liebl, Thomas

(56) Entgegenhaltungen:
- DE-A1-102013 002 653
- JP-A- H05 155 232
- JP-A- 2012 096 757
- US-A1- 2007 131 408
- US-A1- 2015 105 976

## Beschreibung

Die Erfindung betrifft ein Verfahren zur Steuerung einer Fahrgastraum-Klimatisierung eines Hybrid-Fahrzeugs, insbesondere eines Hybrid-Nutzfahrzeugs bei abgestelltem Fahrzeug während Ruhephasen.

Unter einem "abgestellten" Fahrzeug wird ein geparktes Fahrzeug oder ein Fahrzeug in parkähnlicher Fahrzeugposition verstanden. Bei Nutzfahrzeugen ist es allgemein bekannt und üblich, das Fahrerhaus in Fahrpausen und Ruhepausen für die Aufenthaltsdauer zu nutzen, insbesondere zum Schlafen, Wohnen und Arbeiten.

Bei der Entwicklung von Kraftfahrzeugen besteht die allgemeine Forderung nach kraftstoffsparenden Lösungen aus Gründen eines verbesserten Umweltschutzes und einer gesteigerten Wirtschaftlichkeit. Eine allgemein bekannte Maßnahme dazu ist die Hybridisierung von Fahrzeugen, bei denen ein Elektromotor in Verbindung mit einer elektrischen Batterie als Energiespeicher und einer Brennkraftmaschine energieeffizient gemeinsam oder einzeln die Antriebsenergie zur Verfügung stellen, wobei insbesondere in Schubphasen die Batterie durch Rekuperation nachgeladen werden kann. Zudem ist es bekannt, den gesamten Energiehaushalt des Fahrzeugs auch unter Einbeziehung von intelligenten Nebenaggregaten zu überwachen und möglichst energieeffizient zu betreiben. Ein Verfahren zur Steuerung einer Fahrgastraum-Klimatisierung eines Hybrid-Fahrzeuges ist aus der JP2012096757A bekannt.

Dazu ist es bereits bekannt (DE 10 2012 006 325 A1), eine Klimaanlage eines Fahrzeugs so zu steuern, dass innerhalb eines gewissen Rahmens der Fahrerwunsch für eine bestimmte Temperatur im Fahrerhaus entsprechend einer Temperatureinstellung vorkonditioniert wird. Dazu wird in einem Streckengefälle mit überschüssiger Energie das Fahrerhaus stärker gekühlt, um in Lastphasen weniger Klimaleistung abfragen zu müssen. Diese Maßnahme greift jedoch nur für ein Fahrzeug im Fahrbetrieb.

Weiter ist es bekannt, für eine Standklimatisierung bei abgestelltem Fahrzeug während Ruhephasen für eine Fahrerhauskühlung einen Kältespeicher, zum Beispiel einen isolierten Tank mit einer Wasser/Glykol-Füllung, mitzuführen. Der Kältespeicher wird während der Fahrt über die Klimaanlage gekühlt. Anschließend steht bei einem geparkten Fahrzeug mit abgestellter Brennkraftmaschine die gespeicherte Kälte zur Temperierung des Fahrerhauses zur Verfügung. Nachteilig ist hier der erforderliche Bauraum und das ungünstige Gewicht des mitgeführten Kältespeichers.

Aufgabe der Erfindung ist es, ein Verfahren zur Steuerung einer Fahrgastraum-Klimatisierung eines Hybrid-Fahrzeugs, insbesondere eines Hybrid-Nutzfahrzeugs bei abgestelltem Fahrzeug während Ruhephasen, vorzuschlagen, mit dem eine energieeffiziente Klimatisierung ohne einen zusätzlichen Kältespeicher durchführbar ist.

Diese Aufgabe wird mit den Merkmalen der unabhängigen Patentansprüche gelöst. Vorteilhafte Ausgestaltungen sind Gegenstand der Unteransprüche.

Erfindungsgemäß ist vorgesehen, dass eine elektrische Batterie des Hybrid-Fahrzeugs als Energiespeicher die Energie für eine elektrische Fahrgastraum-Klimatisierung liefert.

Eine Steuerung einer Energiemanagementeinheit (nachfolgend kurz Energiemanagement genannt) ermittelt anhand von fahrzeugseitig und/oder von einem Fahrer vorgegebenen, die Klimatisierung beeinflussenden Randbedingungsdaten den erforderlichen Bedarf an elektrischer Energie für die vom Fahrer gewünschte und vorgegebene Klimatisierung während der Ruhephase.

Die Steuerung vergleicht den erforderlichen Energiebedarf mit dem aktuell erfassten Energieinhalt der Batterie und stellt fest, ob der aktuelle, für eine Klimatisierung zur Verfügung stehende Energieinhalt der Batterie für die vom Fahrer gewünschte und vorgegebene Klimatisierung während der Ruhephase ausreicht. Der für die Klimatisierung zur Verfügung stehende Energieinhalt ergibt sich ersichtlich aus der Differenz des aktuell erfassten gesamten Energieinhalts der Batterie als Minus eines vorgegebenen Mindest-Ladezustands, der aufgrund anderer Gegebenheiten und Erfordernisse nicht unterschritten werden darf.

Wenn festgestellt wird, dass der zur Verfügung stehende Energieinhalt der Batterie für die gewünschte Klimatisierung bei den vorgegebenen Randbedingungsdaten ausreicht, wird die Batterie bis zum Ende der Ruhephase zum Betrieb der Klimatisierung entsprechend gesteuert entladen.

Auf diese Weise wird die in der Batterie zur Verfügung stehende Energie für eine Klimatisierung des Fahrgastraums verwendet. Dadurch ist es nicht mehr erforderlich, den zusätzlichen Kältespeicher an dem Fahrzeug vorzusehen.

Mittels des Energiemanagements kann dabei beispielsweise der, insbesondere elektrische, Energieverbrauch des Hybrid-Fahrzeugs und/oder die Erzeugung von, insbesondere elektrischer, Energie mittels des Hybrid-Fahrzeugs gesteuert und/oder geregelt werden.

In einer bevorzugten Verfahrensführung ist, wenn festgestellt wird, dass der zur Verfügung stehende Energieinhalt der Batterie für die vorgegebene Klimatisierung bei den vorgegebenen Randbedingungsdaten und daraus ermittelten Stellgrößen nicht ausreicht, die Steuerung so ausgelegt, dass sie testet, ob durch Anpassungen, Variationen und/oder unterschiedliche Kombinationen von Stellgrößen eine weitere Energieeinsparung möglich ist, dergestalt, dass der Energieinhalt der Batterie für die vorgegebene Klimatisierung ausreicht. Falls dies möglich ist, wird eine entsprechende Anpassung der Stellgrößen und gegebenenfalls des zeitlichen Verfahrensablaufs durchgeführt und die Batterie bis zum Ende der Ruhephase für die Klimatisierungsaufgabe gesteuert entladen. Auf diese Weise wird zuverlässig sichergestellt, dass der Fahrgastraum bis zum Ende der Ruhephase klimatisiert werden kann.

Erfindungsgemäß wird, wenn von der Steuerung festgestellt wird, dass der festgestellte Energieinhalt der Batterie für die vorgegebene Klimatisierung bei den vorgegebenen Randbedingungsdaten und daraus ermittelten, gegebenenfalls auch geänderten und angepassten, Stellgrößen nicht ausreicht, die Batterie mittels einer gestarteten Brennkraftmaschine des Hybridfahrzeugs während der Ruhephase gesteuert nachgeladen wenigstens so weit, dass der damit vergrößerte Energieinhalt der Batterie zum Betrieb der vorgegebenen Klimatisierung bis zum Ende der Ruhephase ausreicht; das heißt bis zur oberen SOC-Grenze (SOC = state of charge = Ladezustand) bzw. bis ein ausreichender Wert erreicht ist, nachgeladen, wobei durch mehrmaliges Voll- oder Teil- Laden möglich ist, so dass der damit vergrößerte Energieinhalt der Batterie zum Betrieb der vorgegebenen Klimatisierung ausreicht. Dadurch wird besonders zuverlässig sichergestellt, dass der Fahrgastraum bis zum Ende der Ruhephase klimatisiert werden kann.

Vorzugsweise wird im Fahrbetrieb die elektrische Batterie durch überschüssige Energie des Antriebsstrangs, insbesondere durch Rekuperation während der Fahrt in Gefällestrecken geladen. Dieses während der Fahrt "eingesammelte" Rekuperations-Potential kann dann bei Fahrzeugstillstand in Ruhephasen energieeffizient für die Klimatisierung des Fahrerhauses genutzt werden. Zudem soll jedoch im Bedarfsfall die Batterie mittels der Brennkraftmaschine mit nachgeschaltetem Generatorbetrieb während Ruhephasen aufgeladen werden können.

Konkret kann die Batterie eine Hochvolt-Batterie (HV-Batterie) oder auch eine Niedervolt-Batterie (NV-Batterie) sein. Zu Heizzwecken werden damit wenigstens ein elektrisches Heizelement und/oder zu Kühlzwecken wird damit wenigstens ein elektrischer Klimakompressor der Klimatisierungseinrichtung betrieben.

Die zum Beispiel vom Fahrer vorgegebenen, für die Klimatisierung relevanten Randbedingungsdaten können einfach über ein vom Fahrer betätigbares Bedienelement, bevorzugt über eine HMI-Schnittstelle und/oder über ein Mobiltelefon mit App und/oder über ein Infotainment-System zur Verarbeitung in der Steuerung eingegeben werden. Solche zum Beispiel vom Fahrer vorzugebenden relevanten Randbedingungsdaten sind insbesondere eine Wunschtemperatur als Solltemperatur im Fahrerhaus und/oder die Länge der Ruhephase und/oder eine Weckzeit, wobei auch gegebenenfalls weitere Vorgaben möglich sind.

Fahrzeugseitig ermittelte und für die Klimatisierung relevante Randbedingungsdaten sind insbesondere eine Außentemperatur und/oder eine Innentemperatur und/oder eine Wettervorhersage, insbesondere zum Temperaturverlauf für den Standort während der Ruhephase, und/oder der für die Klimatisierung aktuell zur Verfügung stehende Energieinhalt der Batterie. Diese Randbedingungsdaten, gegebenenfalls ergänzt um weitere fahrzeugspezifische Daten werden der Steuerung zur Weiterverarbeitung zugeführt.

In einer Weiterbildung des Verfahrens soll die Solltemperatur für die Fahrgastraumklimatisierung in Abhängigkeit eines automatisch ermittelten Fahrerzustand selbsttätig verändert und angepasst werden können.

Beispielsweise kann dazu der Schlaf des Fahrers mittels eines Geräts, insbesondere eines Armbands mit Pulsmessfunktion, überwacht und als Schlaf-Information erfasst bzw. aufgezeichnet werden. Diese so erfasste Schlaf-Information kann dann der Steuerung zugeführt werden, die dann beispielsweise in einer Tiefschlafphase die Solltemperatur für eine weitere Energieeinsparung in vorgegebenen Grenzen anpassen kann.

Falls es erforderlich wird, die Batterie durch den Start der Brennkraftmaschine nachzuladen, soll dies mit einer möglichst geringen Störbeeinflussung eines gegebenenfalls schlafenden Fahrers erfolgen. Dazu wird vorgeschlagen, dass bei einem überwachten Schlaf des Fahrers ein Nachladen der Batterie zur Aufrechterhaltung der Klimatisierungsfunktion in einer festgestellten Tiefschlafphase erfolgt. Zudem soll dabei das Hybrid-System die Brennkraftmaschine bevorzugt in einem Bereich mit akustisch und vibrationstechnisch geringen Störungen bezüglich des Fahrgastraums betreiben. Hierzu sind dann geeignete Werte vorzugeben.

Ein gegebenenfalls notwendiges Nachladen der Batterie kann mit einem Ladevorgang oder in mehreren aufeinanderfolgenden Ladevorgängen gesteuert durchgeführt werden, wobei dies zweckmäßig fallweise durch die Steuerung vorgegeben wird und diese den Zeitpunkt und die Dauer für ein effektives Nachladen der Batterie, insbesondere anhand des aktuellen Ladezustands der Batterie und/oder der Nachladekapazität und/oder der für die Klimatisierung noch erforderlichen Energie, vorgibt.

Weiter wird eine Vorrichtung zur Durchführung des vorstehenden Verfahrens beansprucht. Zudem wird auch ein Fahrzeug, insbesondere ein Nutzfahrzeug, zur Durchführung des vorstehenden Verfahrens und/oder mit der vorstehenden Vorrichtung beansprucht.

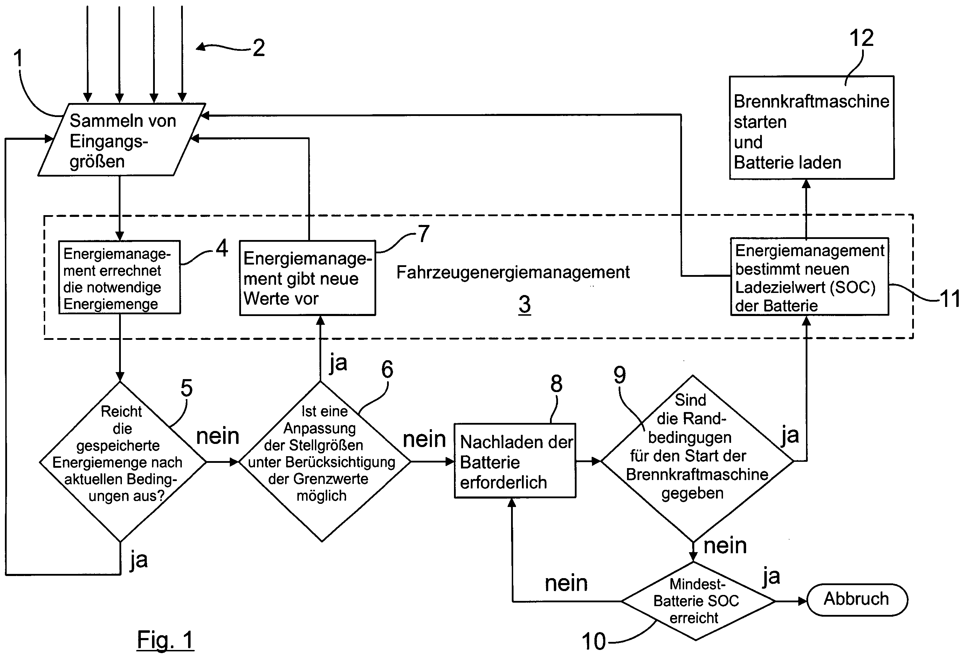

In einer einzigen Figur wird mittels eines Flussdiagramms das erfindungsgemäße Verfahren beispielhaft erläutert:
Das Feld 1 steht schematisch für die Sammlung von Eingangsgrößen, die für eine Fahrgastraum-Klimatisierung eines Hybrid-Fahrzeugs bei abgestelltem Fahrzeug während einer Ruhephase als Randbedingungsdaten relevant sind, wie dies symbolisch durch die Pfeile 2 angegeben ist. Solche relevanten Randbedingungsdaten können einerseits mittels eines Bedienelements von einem Fahrer vorgegeben werden, das sind insbesondere eine Wunschtemperatur als Solltemperatur und/oder die Länge der Ruhephase und/oder eine Weckzeit und so weiter. Zudem werden fahrzeugseitig ermittelte, relevante Randbedingungsdaten vorgegeben, insbesondere eine Außentemperatur und/oder eine Innentemperatur und/oder eine Wettervorhersage zu Temperaturen für den Standort und insbesondere der für die Kühlaufgabe während der Ruhephase zur Verfügung stehende Energieinhalt der Batterie, der sich aus dem Ladestatus bzw. -zustand (SOC = State of Charge) ergibt.

Vom Fahrzeugenergiemanagement bzw. Energiemanagement 3 wird in einem der Klimatisierung zugeordneten Steuerungsbereich (Feld 4) die für die Klimatisierungsaufgabe entsprechend der vorgegebenen Randbedingungen voraussichtlich notwendige Energiemenge berechnet.

Anschließend wird in der Entscheidungsraute 5 festgestellt, ob die gespeicherte Energiemenge nach den aktuellen Bedingungen für die Klimatisierungsaufgabe ausreicht. Für diesen Fall wird die Klimatisierung ohne weiteres während der Ruhephase durchgeführt und die Energie von der Batterie entsprechend bereitgestellt.

Falls die gespeicherte Energiemenge voraussichtlich nicht ausreicht, wird in der nachfolgenden Entscheidungsraute 6 geprüft, ob, gegebenenfalls durch Anpassung und Variation von Stellgrößen, die vorgegebene Klimatisierungsaufgabe mit der aktuell gespeicherten Energiemenge noch durchführbar ist. Falls dies möglich ist, werden durch das Energiemanagement 3 entsprechend neue Werte für die Stellgrößen vorgegeben (Feld 7).

Falls eine entsprechende Anpassung von Stellgrößen nicht möglich ist, wird festgestellt, dass ein Nachladen der Batterie erforderlich ist (Feld 8). Die Nachladung soll durch den Start einer Brennkraftmaschine des Hybrid-Fahrzeugs erfolgen. Dazu wird in der Entscheidungsraute 9 überprüft, ob die Randbedingungen für den Start einer zum Beispiel dieselbetriebenen, Brennkraftmaschine gegeben sind. Wenn diese Randbedingungen nicht vorliegen, wird versucht diese Randbedingungen herzustellen oder abzuwarten, zum Beispiel eine Tiefschlafphase des Fahrers, wobei unter Berücksichtigung eines Mindestladezustands der Batterie der Vorgang abgebrochen werden kann. Liegen dagegen die Randbedingungen für den Verbrennerstart vor, bestimmt das Energiemanagement unter Berücksichtigung der Klimatisierungsaufgabe einen Ladezielwert (SOC) der Batterie, mit dem die Klimatisierungsaufgabe entsprechend der Vorgaben durchgeführt werden kann (Feld 11), worauf dann die Brennkraftmaschine gestartet und die Batterie nachgeladen wird (Feld 12).

### Bezugszeichenliste

- 1: Feld
- 2: Pfeile
- 3: Fahrzeugenergiemanagement
- 4: Feld
- 5: Entscheidungsraute
- 6: Entscheidungsraute
- 7: Feld
- 8: Feld
- 9: Entscheidungsraute
- 10: Entscheidungsraute
- 11: Feld
- 12: Feld

## Patentansprüche

1. Verfahren zur Steuerung einer Fahrgastraum-Klimatisierung eines Hybrid-Fahrzeugs, insbesondere eines Hybrid-Nutzfahrzeugs bei abgestelltem Fahrzeug während Ruhephasen,
wobei eine elektrische Batterie als Energiespeicher die Energie für eine elektrische Fahrgastraum-Klimatisierung liefert,
wobei eine Steuerung eines Energiemanagements anhand von fahrzeugseitig und/oder von einem Fahrer vorgegebenen, die Klimatisierung beeinflussenden Randbedingungsdaten (2) den erforderlichen Bedarf an elektrischer Energie für die Klimatisierung während einer Ruhephase ermittelt (4),
wobei die Steuerung den erforderlichen Energiebedarf mit dem aktuellen, erfassten Energieinhalt der Batterie vergleicht und feststellt, ob der aktuelle, für eine Klimatisierung zur Verfügung stehende Energieinhalt der Batterie für die vom Fahrer gewünschte und vorgegebene Klimatisierung während der Ruhephase ausreicht (5), und
wobei bei festgestelltem, für die gewünschte Klimatisierung bei den vorgegebenen Randbedingungsdaten ausreichenden Energieinhalt der Batterie, diese bis zum Ende der Ruhephase zum Betrieb der Klimatisierung entsprechend gesteuert entladen wird,
**dadurch gekennzeichnet, dass** bei festgestelltem, für die vorgegebene Klimatisierung bei den vorgegebenen Randbedingungsdaten und daraus ermittelten, gegebenenfalls angepassten, Stellgrößen nicht ausreichenden Energieinhalt der Batterie, diese mittels einer gestarteten Brennkraftmaschine des Hybrid-Fahrzeugs während der Ruhephase gesteuert nachgeladen wird (8; 12), wenigstens so weit, dass der damit vergrößerte Energieinhalt der Batterie zum Betrieb der vorgegebenen Klimatisierung bis zum Ende der Ruhephase ausreicht (11).

2. Verfahren nach Anspruch 1, **dadurch gekennzeichnet, dass** bei festgestelltem, für die vorgegebene Klimatisierung bei den vorgegebenen Randbedingungsdaten und daraus ermittelter Stellgrößen nicht ausreichenden Energieinhalt der Batterie, die Steuerung eine Anpassung der Stellgrößen unter Berücksichtigung der vorgegebenen Klimatisierung berechnet (6) und vornimmt (7), um auch noch mit diesem aktuellen Energieinhalt der Batterie die Klimatisierungsaufgabe durchführen zu können.

3. Verfahren nach einem der vorhergehenden Ansprüche, **dadurch gekennzeichnet, dass** die elektrische Batterie durch überschüssige Energie des Antriebsstrangs, insbesondere durch Rekuperation während der Fahrt und/oder mittels der Brennkraftmaschine mit nachgeschaltetem Generatorbetrieb, aufladbar ist.

4. Verfahren nach einem der vorhergehenden Ansprüche, **dadurch gekennzeichnet, dass** die Batterie eine Hochvolt-Batterie (HV-Batterie) oder eine Niedervolt-Batterie (NV-Batterie) ist und die Klimatisierungseinrichtung wenigstens ein damit betreibbares elektrisches Heizelement und/oder wenigstens einen elektrischen Klimakompressor aufweist.

5. Verfahren nach einem der vorhergehenden Ansprüche, **dadurch gekennzeichnet, dass** mittels eines durch einen Fahrer des Fahrzeugs betätigbaren Bedienelements, bevorzugt über eine HMI-Schnittstelle und/oder über ein Mobiltelefon mit App und/oder über ein Infotainment-System, zumindest ein Teil der Randbedingungsdaten (2), bevorzugt eine Wunschtemperatur als Solltemperatur und/oder die Länge der Ruhephase und/oder eine Weckzeit, der Steuerung vorgegeben werden.

6. Verfahren nach einem der vorhergehenden Ansprüche, **dadurch gekennzeichnet, dass** fahrzeugseitig ermittelte Randbedingungsdaten (2), bevorzugt eine Außentemperatur und/oder eine Innentemperatur und/oder eine Wettervorhersage, insbesondere zu Temperaturen für den Standort während der Ruhephase, und/oder der zur Verfügung stehender Energieinhalt der Batterie, der Steuerung zugeführt werden.

7. Verfahren nach einem der vorhergehenden Ansprüche, **dadurch gekennzeichnet, dass** die Solltemperatur für die Fahrgastraum-Klimatisierung in Abhängigkeit eines automatisch ermittelten Fahrerzustands selbsttätig verändert wird.

8. Verfahren nach Anspruch 7, **dadurch gekennzeichnet, dass** ein Schlaf des Fahrers mittels eines Geräts, insbesondere mittels eines Armbands mit Pulsmessfunktion, überwacht und als Schlaf-Information erfasst wird, und dass diese Schlaf-Information der Steuerung zugeführt wird.

9. Verfahren nach Anspruch 8, **dadurch gekennzeichnet, dass** die Solltemperatur des Fahrgastraums entsprechend dieser Information angepasst wird.

10. Verfahren nach Anspruch 8 oder 9, **dadurch gekennzeichnet, dass** bei einer festgestellten Tiefschlafphase des Fahrers die Brennkraftmaschine zur Nachladung der Batterie und Aufrechterhaltung der Klimatisierungsfunktion gestartet wird.

11. Verfahren nach einem der vorhergehenden Ansprüche, **dadurch gekennzeichnet, dass** ein Nachladen der Batterie mit einem Ladevorgang oder in mehreren aufeinanderfolgenden Ladevorgängen gesteuert durchgeführt wird, wobei die Steuerung den Zeitpunkt und die Dauer für ein Nachladen der Batterie, insbesondere anhand des aktuellen Ladezustands der Batterie und/oder der Nachladekapazität und/oder der für die Klimatisierung noch erforderlichen Energie, vorgibt.

12. Vorrichtung zur Steuerung einer Fahrgastraum-Klimatisierung eines Hybrid-Fahrzeugs, insbesondere eines Hybrid-Nutzfahrzeugs bei abgestelltem Fahrzeug während Ruhephasen und zur Durchführung eines Verfahrens nach einem der vorhergehenden Ansprüche,
wobei eine elektrische Batterie als Energiespeicher die Energie für eine elektrische Fahrgastraum-Klimatisierung liefert,
wobei eine Steuerung eines Energiemanagements anhand von fahrzeugseitig und/oder von einem Fahrer vorgegebenen, die Klimatisierung beeinflussenden Randbedingungsdaten (2) den erforderlichen Bedarf an elektrischer Energie für die Klimatisierung während der Ruhephase ermittelt (4),
wobei die Steuerung den erforderlichen Energiebedarf mit dem aktuellen, erfassten Energieinhalt der Batterie vergleicht und feststellt, ob der aktuelle, für eine Klimatisierung zur Verfügung stehende Energieinhalt der Batterie für die vom Fahrer gewünschte und vorgegebene Klimatisierung während der Ruhephase ausreicht (5),
wobei bei festgestelltem, für die gewünschte Klimatisierung bei den vorgegebenen Randbedingungsdaten ausreichenden Energieinhalt der Batterie, diese bis zum Ende der Ruhephase zum Betrieb der Klimatisierung entsprechend gesteuert entladen wird,
**dadurch gekennzeichnet, dass** bei festgestelltem, für die vorgegebene Klimatisierung bei den vorgegebenen Randbedingungsdaten und daraus ermittelten, gegebenenfalls angepassten, Stellgrößen nicht ausreichenden Energieinhalt der Batterie, diese mittels einer gestarteten Brennkraftmaschine des Hybrid-Fahrzeugs während der Ruhephase gesteuert nachgeladen wird (8; 12), wenigstens so weit, dass der damit vergrößerte Energieinhalt der Batterie zum Betrieb der vorgegebenen Klimatisierung bis zum Ende der Ruhephase ausreicht (11).

13. Fahrzeug, insbesondere Nutzfahrzeug, zur Durchführung eines Verfahrens nach einem der Ansprüche 1 bis 11 und/oder mit einer Vorrichtung nach Anspruch 12.

## Claims

1. Method for controlling passenger compartment air conditioning of a hybrid vehicle, in particular a hybrid commercial vehicle, when the vehicle is switched off during resting phases,
wherein an electrical battery, as the energy store, provides the energy for electrical passenger compartment air conditioning,
wherein a controller of an energy management system determines (4) the necessary requirement for electrical energy for the air conditioning during a resting phase on the basis of boundary condition data (2) which are predefined by the vehicle and/or by a driver and influence the air conditioning,
wherein the controller compares the necessary energy requirement with the current captured energy content of the battery and determines whether the current energy content of the battery available for air conditioning suffices (5) for the predefined air conditioning desired by the driver during the resting phase, and
wherein, if it is determined that the energy content of the battery suffices for the desired air conditioning for the predefined boundary condition data, the battery is accordingly discharged in a controlled manner until the end of the resting phase in order to operate the air conditioning,
**characterized in that**, if it is determined that the energy content of the battery does not suffice for the predefined air conditioning for the predefined boundary condition data and manipulated variables which are determined therefrom and are possibly adapted, the battery is recharged (8; 12) in a controlled manner by means of a started internal combustion engine of the hybrid vehicle during the resting phase at least until the energy content of the battery increased thereby suffices (11) to operate the predefined air conditioning until the end of the resting phase.

2. Method according to Claim 1, **characterized in that**, if it is determined that the energy content of the battery does not suffice for the predefined air conditioning for the predefined boundary condition data and manipulated variables determined therefrom, the controller calculates (6) and performs (7) an adaptation of the manipulated variables taking into account the predefined air conditioning in order to still be able to carry out the air-conditioning task with this current energy content of the battery.

3. Method according to one of the preceding claims, **characterized in that** the electrical battery can be charged by means of excess energy of the drive train, in particular by means of recuperation during the journey and/or by means of the internal combustion engine with downstream generator operation.

4. Method according to one of the preceding claims, **characterized in that** the battery is a high-voltage battery (HV battery) or a low-voltage battery (LV battery) and the air-conditioning device has at least one electrical heating element which can be operated thereby and/or at least one electrical air-conditioning compressor.

5. Method according to one of the preceding claims, **characterized in that** at least some of the boundary condition data (2), preferably a desired temperature as a setpoint temperature and/or the length of the resting phase and/or a wake-up time, are predefined to the controller by means of an operating element which can be actuated by a driver of the vehicle, preferably via an HMI interface and/or via a mobile telephone with an app and/or via an infotainment system.

6. Method according to one of the preceding claims, **characterized in that** boundary condition data (2) determined by the vehicle, preferably an outside temperature and/or an inside temperature and/or a weather forecast, in particular for temperatures for the location during the resting phase, and/or the available energy content of the battery, are supplied to the controller.

7. Method according to one of the preceding claims, **characterized in that** the setpoint temperature for the passenger compartment air conditioning is automatically changed on the basis of an automatically determined driver condition.

8. Method according to Claim 7, **characterized in that** sleeping of the driver is monitored by means of a device, in particular by means of a wristband with a pulse measuring function, and is captured as sleep information, and **in that** this sleep information is supplied to the controller.

9. Method according to Claim 8, **characterized in that** the setpoint temperature of the passenger compartment is adapted according to this information.

10. Method according to Claim 8 or 9, **characterized in that**, if a deep sleep phase of the driver is determined, the internal combustion engine is started in order to recharge the battery and maintain the air-conditioning function.

11. Method according to one of the preceding claims, **characterized in that** the battery is recharged in a controlled manner using one charging operation or in a plurality of successive charging operations, wherein the controller predefines the time and the period for recharging the battery, in particular on the basis of the current state of charge of the battery and/or the recharging capacity and/or the energy still required for the air conditioning.

12. Apparatus for controlling passenger compartment air conditioning of a hybrid vehicle, in particular a hybrid commercial vehicle, when the vehicle is switched off during resting phases and for carrying out a method according to one of the preceding claims,
wherein an electrical battery, as the energy store, provides the energy for electrical passenger compartment air conditioning,
wherein a controller of an energy management system determines (4) the necessary requirement for electrical energy for the air conditioning during the resting phase on the basis of boundary condition data (2) which are predefined by the vehicle and/or by a driver and influence the air conditioning,
wherein the controller compares the necessary energy requirement with the current captured energy content of the battery and determines whether the current energy content of the battery available for air conditioning suffices (5) for the predefined air conditioning desired by the driver during the resting phase,
wherein, if it is determined that the energy content of the battery suffices for the desired air conditioning for the predefined boundary condition data, the battery is accordingly discharged in a controlled manner until the end of the resting phase in order to operate the air conditioning,
**characterized in that**, if it is determined that the energy content of the battery does not suffice for the predefined air conditioning for the predefined boundary condition data and manipulated variables which are determined therefrom and are possibly adapted, the battery is recharged (8; 12) in a controlled manner by means of a started internal combustion engine of the hybrid vehicle during the resting phase at least until the energy content of the battery increased thereby suffices (11) to operate the predefined air conditioning until the end of the resting phase.

13. Vehicle, in particular commercial vehicle, for carrying out a method according to one of Claims 1 to 11 and/or with an apparatus according to Claim 12.

## Revendications

1. Procédé de commande d'une climatisation d'habitacle d'un véhicule hybride, en particulier d'un véhicule utilitaire hybride lorsque le véhicule est en stationnement pendant des phases de repos,
dans lequel une batterie électrique comme accumulateur d'énergie fournit l'énergie pour une climatisation d'habitacle électrique,
dans lequel une commande d'une gestion d'énergie détecte (4) le besoin en énergie électrique nécessaire à la climatisation pendant une phase de repos à l'aide de données de conditions marginales (2) qui influencent la climatisation et sont spécifiées côté véhicule et/ou par un conducteur,
dans lequel la commande compare le besoin en énergie nécessaire au contenu énergétique acquis actuel de la batterie et détermine si le contenu énergétique actuel de la batterie, disponible pour la climatisation, est suffisant (5) pour la climatisation souhaitée et spécifiée par le conducteur pendant la phase de repos, et
dans lequel, pour un contenu énergétique déterminé de la batterie, suffisant pour la climatisation souhaitée selon les données de conditions marginales spécifiées, la batterie sera déchargée de manière contrôlée en conséquence jusqu'à la fin de la phase de repos pour faire fonctionner la climatisation,
**caractérisé en ce que** pour un contenu énergétique déterminé de la batterie, insuffisant pour la climatisation spécifiée selon les données de conditions marginales spécifiées et des grandeurs de réglage détectées à partir de celles-ci et éventuellement ajustées, la batterie sera rechargée de manière contrôlée (8 ; 12) au moyen d'un moteur à combustion interne démarré du véhicule hybride pendant la phase de repos, au moins jusqu'à ce que le contenu énergétique de la batterie, ainsi augmenté, soit suffisant (11) pour faire fonctionner la climatisation spécifiée jusqu'à la fin de la phase de repos.

2. Procédé selon la revendication 1, **caractérisé en ce que** pour un contenu énergétique déterminé de la batterie, insuffisant pour la climatisation spécifiée selon les données de conditions marginales spécifiées et des grandeurs de réglage déterminées à partir de celles-ci, la commande calcule (6) et effectue (7) un ajustement des grandeurs de réglage en tenant compte de la climatisation spécifiée afin de pouvoir accomplir la mission de climatisation même avec ce contenu énergétique actuel de la batterie.

3. Procédé selon l'une quelconque des revendications précédentes, **caractérisé en ce que** la batterie électrique peut être rechargée par un surplus d'énergie du groupe motopropulseur, en particulier par récupération pendant la marche et/ou au moyen du moteur à combustion interne avec mode générateur monté en aval.

4. Procédé selon l'une quelconque des revendications précédentes, **caractérisé en ce que** la batterie est une batterie haute tension (batterie HT) ou une batterie basse tension (batterie BT) et le système de climatisation présente au moins un élément chauffant électrique pouvant être actionné par celle-ci et/ou au moins un compresseur de climatisation électrique.

5. Procédé selon l'une quelconque des revendications précédentes, **caractérisé en ce qu'**au moins une partie des données de conditions marginales (2), de préférence une température souhaitée comme température de consigne et/ou la durée de la phase de repos et/ou une heure d'alarme, est spécifiée pour la commande au moyen d'un élément de commande actionné par un conducteur du véhicule, de préférence par l'intermédiaire d'une interface HMI et/ou d'un téléphone mobile muni d'une application et/ou d'un système d'infodivertissement.

6. Procédé selon l'une quelconque des revendications précédentes, **caractérisé en ce que** des données de conditions marginales (2) détectées côté véhicule, de préférence une température extérieure et/ou une température intérieure et/ou des prévisions météorologiques, en particulier concernant les températures pour le lieu pendant la phase de repos, et/ou le contenu énergétique disponible de la batterie, sont fournies à la commande.

7. Procédé selon l'une quelconque des revendications précédentes, **caractérisé en ce que** la température de consigne pour la climatisation de l'habitacle est modifiée de manière autonome en fonction d'un état du conducteur détecté automatiquement.

8. Procédé selon la revendication 7, **caractérisé en ce que** le sommeil du conducteur est surveillé au moyen d'un appareil, en particulier au moyen d'un bracelet avec fonction de mesure du pouls, et est acquis sous forme d'information de sommeil, et **en ce que** cette information de sommeil est fournie à la commande.

9. Procédé selon la revendication 8, **caractérisé en ce que** la température de consigne de l'habitacle est ajustée en fonction de cette information.

10. Procédé selon la revendication 8 ou 9, **caractérisé en ce que** dans une phase de sommeil profond du conducteur déterminée, le moteur à combustion interne est démarré pour recharger la batterie et maintenir la fonction de climatisation.

11. Procédé selon l'une quelconque des revendications précédentes, **caractérisé en ce qu'**une recharge de la batterie est effectuée de manière contrôlée par une opération de charge ou en plusieurs opérations de charge successives, l'unité de commande spécifiant l'instant et la durée pour une recharge de la batterie, en particulier au moyen de l'état de charge actuel de la batterie et/ou de la capacité de recharge et/ou de l'énergie encore nécessaire à la climatisation.

12. Dispositif permettant de commander une climatisation d'habitacle d'un véhicule hybride, en particulier d'un véhicule utilitaire hybride lorsque le véhicule est en stationnement pendant des phases de repos et d'effectuer un procédé selon l'une quelconque des revendications précédentes,
dans lequel une batterie électrique comme accumulateur d'énergie fournit l'énergie pour une climatisation d'habitacle électrique,
dans lequel une commande d'une gestion d'énergie détecte (4) le besoin en énergie électrique nécessaire à la climatisation pendant une phase de repos à l'aide de données de conditions marginales (2) qui influencent la climatisation et sont spécifiées côté véhicule et/ou par un conducteur,
dans lequel la commande compare le besoin en énergie nécessaire au contenu énergétique acquis actuel de la batterie et détermine si le contenu énergétique actuel de la batterie, disponible pour la climatisation, est suffisant (5) pour la climatisation souhaitée et spécifiée par le conducteur pendant la phase de repos,
dans lequel, pour un contenu énergétique déterminé de la batterie, suffisant pour la climatisation souhaitée selon les données de conditions marginales spécifiées, la batterie sera déchargée de manière contrôlée en conséquence jusqu'à la fin de la phase de repos pour faire fonctionner la climatisation,
**caractérisé en ce que** pour un contenu énergétique déterminé de la batterie, insuffisant pour la climatisation spécifiée selon les données de conditions marginales spécifiées et des grandeurs de réglage détectées à partir de celles-ci et éventuellement ajustées, la batterie sera rechargée de manière contrôlée (8 ; 12) au moyen d'un moteur à combustion interne démarré du véhicule hybride pendant la phase de repos, au moins jusqu'à ce que le contenu énergétique de la batterie, ainsi augmenté, soit suffisant (11) pour faire fonctionner la climatisation spécifiée jusqu'à la fin de la phase de repos.

13. Véhicule, en particulier véhicule utilitaire, pour effectuer un procédé selon l'une quelconque des revendications 1 à 11 et/ou avec un dispositif selon la revendication 12.
